# EUROPÄISCHE PATENTSCHRIFT

(11) **EP 2 081 778 B1**
(45) Veröffentlichungstag und Bekanntmachung des Hinweises auf die Patenterteilung: **24.11.2010**
(21) Anmeldenummer: 07822089.4
(22) Anmeldetag: 31.10.2007
(51) Int. Cl.: B60B 33/02

(54) **DOPPELROLLE MIT ZWEI LAUFRÄDERN SOWIE ROLLE MIT EINEM LAUFRAD**
DOUBLE ROLLER WITH TWO RUNNING WHEELS AND ROLLER WITH ONE RUNNING WHEEL
ROUE À PIVOT DOUBLE AVEC DEUX ROUES MOBILES ET ROUE À PIVOT AVEC UNE ROUE MOBILE

(30) Priorität: 07.11.2006 DE 102006052680; 20.08.2007 DE 102007039208
(43) Veröffentlichungstag der Anmeldung: 29.07.2009
(73) Patentinhaber: Tente GmbH & Co. KG, 42929 Wermelskirchen (DE)
(72) Erfinder: BLOCK, Wolfgang, 42929 Wermelskirchen (DE); HARKSEN, Uwe, 42929 Wermelskirchen (DE)
(74) Vertreter: Rieder, Hans-Joachim
(86) Internationale Anmeldenummer: PCT/EP2007/061742
(87) Internationale Veröffentlichungsnummer: WO 2008/055831

(56) Entgegenhaltungen:
- EP-A- 0 379 065
- EP-A- 1 527 906
- WO-A-01/14153
- DE-A1- 4 222 728
- DE-U1- 8 915 173
- DE-U1- 20 016 429
- GB-A- 2 240 471

## Beschreibung

Die Erfindung betrifft eine Doppelrolle mit zwei Laufrädern nach den Merkmalen der Oberbegriffes des Anspruches 1.

Doppelrollen der in Rede stehenden Art sind bekannt. Diese finden beispielsweise Verwendung an Krankenbetten, Möbeln oder dergleichen, wobei über den traggehäuseseitigen Montagezapfen eine Formschlussverbindung zwischen Doppelrolle und beispielsweise dem Krankenbett erreicht ist. Über ein Stellwerkzeug oder dergleichen wird im Bereich des Montagezapfens auf den einliegenden Betätigungsstößel eingewirkt, zur Verlagerung desselben in Axialrichtung. Über den Betätigungsstößel lässt sich aus einer Neutralstellung, in welcher die Doppelrolle als Lenkrolle wirkt, eine Bockrollenstellung erreichen, in welcher die Doppelrolle richtungsgebunden in einer Schwenkstellung festgelegt wird. Die Laufräder sind in dieser Stellung weiter frei drehbar. In einer weiteren Betätigungsstellung des Stößels ist eine unabhängig von der eingenommenen Schwenkstellung der Doppelrolle erreichbare Totalfeststellung einnehmbar, in welcher Totalfeststellung zugleich die Laufräder in Drehrichtung blockiert sind. Die DE-U-8915173 beschreibt eine Doppelrolle nach den Merkmalen des Oberbegriffes des Anspruches 1. Bei dieser bekannten Doppelrolle ist das Feststellgegenteil in einem dieses unterfassenden Gehäuseabschnitt angeordnet. Zudem ist der Betätigungsstößel vollständig niederzudrücken, um die Eingriffsstellung der Eingriffsteile zu erreichen. Weiter ist zum Stand der Technik auf die DE 2016429 U1 und die EP 0379065 A zu verweisen.

Ausgehend von dem genannten Stand der Technik stellt sich der Erfindung die Aufgabe, die Doppelrolle hinsichtlich einer Montagefreundlichkeit zu verbessern.

Diese Aufgabe ist beim Gegenstand des Anspruches 1 gelöst, wobei darauf abgestellt ist, dass unterhalb des Kugellagers in dem sich hinsichtlich seiner Innenöffnung lediglich öffnenden Gehäuseabschnittes das Feststellgegenteil einliegt und dass die oberste Stellung des Betätigungsstößels der Eingriffsstellung der Eingriffsteile entspricht. Das Feststellgegenteil ist entsprechend nicht Bestandteil des Betätigungsstößels oder ist mit diesem bewegungsverbunden. Vielmehr ist das Feststellgegenteil bevorzugt den Betätigungsstößel umgebend in der Gehäuseinnenöffnung zur Zusammenwirkung mit dem Stößel angeordnet, dies weiter bevorzugt zumindest in einer Axialrichtung aus einer Grundstellung heraus bewegungsgehindert. Dadurch, dass die oberste Stellung des Betätigungsstößels der Eingriffsstellung der Eingriffsteile entspricht, drängt die Federkraft den Betätigungsstößel in die Drehblockierungsstellung. Das Feststellgegenteil dient sowohl zur Richtungs- als auch zur Totalfeststellung der Doppelrolle. Zufolge dieser Ausgestaltung lässt sich eine Bauhöhenreduzierung des den Betätigungsstößel umgebenden Traggehäuseabschnittes erreichen. Darüber hinaus ist durch den sich hinsichtlich seiner Innenöffnung lediglich nach unten öffnenden Gehäuseabschnitt die Montage, insbesondere Erstmontage, der Doppelrollen-Einrichtungsteile, wie Betätigungsstößel, Feststellgegenteil oder auch Laufradbremsteil sowie vorgesehene Federn erleichtert. Es ist hierdurch die Möglichkeit gegeben, diese Einrichtungsteile nur von einer Seite her, nämlich von unten in das Traggehäuse einzusetzen.

In einer Weiterbildung des Erfindungsgegenstandes ist vorgesehen, dass das Feststellgegenteil nach oben unabhängig von der Schwenkblockierstellung durch eine Gehäuseschulter abgestützt ist. Entsprechend stellt sich das Feststellgegenteil bevorzugt als ein axial verlagerbares Einsatzteil dar, das in einer Grundstellung nach axial oben anschlagbegrenzt in dem Gehäuseabschnitt einliegt, dies bei axialer Beweglichkeit aus der Grundstellung heraus nach unten. Auch wird vorgeschlagen, dass der Betätigungsstößel unterhalb des Feststellgegenteils nur mittels des Laufradbremsteils in dem Gehäuse radial abgestützt ist. Zufolge dieser Ausgestaltung kann der Betätigungsstößel in Axialrichtung betrachtet auf ein wirksames Minimum reduziert werden. Der mit dem Laufradbremsteil in Eingriff stehende Stößelabschnitt wird zugleich durch das Laufradbremsteil radial abgestützt. Es bedarf entsprechend keiner weiteren Radialabstützung des Stößels durch einen Gehäuseabschnitt, insbesondere keinen sich unterhalb des Laufradbremsteiles sich noch ergebenden Gehäuseabschnittes. Auch dies trägt zur Bauhöhenreduzierung bei. Das Laufradbremsteil ist selbst bevorzugt in dem sich hinsichtlich seiner Innenöffnung lediglich öffnenden Gehäuseabschnitt geführt, d.h. radial abgestützt.

Bevorzugt wird weiter, dass der Betätigungsstößel über eine Stößelfeder in seine oberste Stellung vorgespannt ist, wobei weiter der Betätigungsstößel, bevorzugt im Bereich des der Stößelfeder abgewandten oberen Endes mit einem Steuernocken zusammenwirkt, zur Einstellung der unterschiedlichen Axialstellungen des Betätigungsstößels. Die oberste Stellung des Betätigungsstößels entspricht hierbei der Eingriffsstellung der Eingriffsteile, d.h. insbesondere der Eingriffsteile zur Drehfestlegung der Laufräder aber auch bevorzugt der Teile zur Schwenkfestlegung, so dass die oberste Stellung des Betätigungsstößels der Totalfeststellung der Doppelrolle entspricht. Hieraus resultiert, dass die Stößelfeder eine Nachstellfeder darstellend stets bestrebt ist, den Betätigungsstößel in die Totalfeststellung zu drängen. Diese Stößelfeder ist in einer bevorzugten Ausgestaltung einerseits am Gehäuse und andererseits am Laufradbremsteil abgestützt, über welches Laufradbremsteil die Federkraft auf den Betätigungsstößel wirkt. Die Stößelfeder stellt das Laufradbremsteil stets entsprechend der Stößelstellung nach. Entsprechend drängt die Stößelfeder durch direkte Beaufschlagung das Laufradbremsteil stets in Richtung auf die Laufrad-Drehblockierung. Die Aufhebung einer solchen Drehblockierung ist nur entgegen der Kraft der Stößelfeder erreichbar.

Eine erhöhte Kippstabilität des Betätigungsstößels ist erreicht durch Anordnung zweier untereinander vorgesehener Kugellager, die beide oberhalb des Feststellgegenteils positioniert sind, dies weiter bevorzugt im Bereich eines oberen Endes des den Betätigungsstößel aufnehmenden Traggehäuseabschnittes, an welchem Ende sich der Montagezapfen anschließt. Die beiden Kugellager sind etwa mit in Axialrichtung betrachteter Lagerstärke zueinander axial beabstandet, wobei weiter diese beiden Kugellager unterschiedliche Außendurchmesser aufweisen. So ist beispielsweise das axial innere Kugellager außendurchmesserverringert gegenüber dem axial äußeren Kugellager.

Zur Totalfeststellung wirkt das Feststellgegenteil mit einem Schwenkblockierungsteil zusammen, wobei das Feststellgegenteil und das Schwenkblockierungsteil unabhängig voneinander axial beweglich sind. Das Schwenkblockierungsteil wird über den Betätigungsstößel zur Zusammenwirkung mit dem Feststellgegenteil bewegt, wobei weiter das Schwenkblockierungsteil relativ zu dem Betätigungsstößel axial verlagerbar ist. Dies ist erreicht durch eine auf das Schwenkblockierungsteil einwirkende Feder, die weiter in dieselbe Richtung wirkt wie die Stößelfeder. So ist weiter vorgesehen, dass das Feststellgegenteil und das Schwenkblockierungsteil jeweils durch eine eigene Feder, eine erste und eine zweite Vorspannfeder, belastet sind, welche beiden Vorspannfedern gleichgerichtet in dieselbe Richtung wirken wie die Stößelfeder, d.h. mit Bezug auf die Ausrichtung des Betätigungsstößels nach oben, wobei über die erste Vorspannfeder das Feststellgegenteil gegen die Gehäuseschulter vorgespannt ist und das Schwenkblockierungsteil über die zweite Vorspannfeder anschlagbegrenzt gegen den Betätigungsstößel. Die erste und zweite Vorspannfeder sind zur weiteren Bauhöhenreduzierung konzentrisch zueinander angeordnet, dies jeweils umschließend einen unteren Teilabschnitt des Betätigungsstößels. Beide Vorspannfedern stützen sich hierbei abgewandt zu dem Feststellgegenteil bzw. Schwenkblockierungsteil an dem Laufradbremsteil ab, dies auf der der Stößelfeder abgewandten Seite des Laufradbremsteils. Bevorzugt weist hierbei die zweite auf das Schwenkblockierungsteil einwirkende Vorspannfeder eine der Stößelfeder entsprechenden Durchmesser auf. Die erste Vorspannfeder ist demgegenüber weiter durchmesservergrößert.

Das Feststellgegenteil wirkt weiter zur Richtungsfeststellung (Bockrollenstellung) mit einem Richtungsfeststellteil zusammen, wobei das Feststellgegenteil und das Richtungsfeststellteil unabhängig voneinander axial beweglich sind. In Zusammenwirkungsstellung von Feststellgegenteil und Richtungsfeststellteil nimmt die Doppelrolle die Funktion einer Bockrolle ein. Das Richtungsfeststellteil ist hierbei an dem Betätigungsstößel ausgebildet, weiter mit diesem bewegungsgefesselt, wobei in einer Weiterbildung des Erfindungsgegenstandes dieses Richtungsfeststellteil zugleich die Anschlagbegrenzung für das Schwenkblockierungsteil in Axialrichtung bietet. Entsprechend wird über das Richtungsfeststellteil das Schwenkblockierungsteil bei einer entgegen Federwirkung vorgenommenen Absenkung des Betätigungsstößels mitgeschleppt, dies bei weiterhin unabhängig voneinander gegebener axialer Beweglichkeit von Schwenkblockierungsteil und Richtungsfeststellteil.

Das Laufradbremsteil weist weiter bevorzugt zentral bezüglich des Betätigungsstößels eine Einstellschraube auf. Über diese ist eine Justage des Laufradbremsteiles in Axialrichtung relativ zu dem Betätigungsstößel durchführbar. Diese Einstellschraube ist weiter bevorzugt von unten, von der vorbeschriebenen Montageseite der Doppelrolle her zugänglich, wozu das Gehäuse eine entsprechende Zugangsöffnung aufweist.

Das Traggehäuse weist eine Horizontalteilung auf, wobei die Teilung unterhalb der Laufradachse ausgebildet ist. Es ergibt sich hierdurch ein Traggehäuse-Unterteil und ein Traggehäuse-Oberteil, in welch letzterem bevorzugt das gesamte Eingerichte wie beispielsweise der Betätigungsstößel und etwaig weiter vorgesehene Blockierungsteile eingesetzt werden. Nach dem Einsetzen der Eingerichteteile wird das Gehäuse geschlossen durch Aufsetzen des Traggehäuse-Unterteils, welch letzteres abschließend ggf. noch gesichert wird. Bevorzugt wird diesbezüglich eine Rastverbindung zwischen Unterteil und Oberteil. Das Einsetzen der Eingerichteteile in das Traggehäuse-Oberteil kann durch die vorgeschlagene Gehäuseteilung allein von unten durch eine abschließende durch das Unterteil überdeckte Montageöffnung erfolgen.

In einer Weiterbildung des Erfindungsgegenstandes ist vorgesehen, dass die Gehäuseteile im Bereich der Laufradachse ineinander greifen. So ist vorgesehen, dass jedes Gehäuseteil einen Teil der Laufradnabe ausbildet. Über den Achskörper für die beiden Laufräder ist eine formschlüssige Steckverbindung zwischen den Gehäuseteilen erreichbar.

Das obere Gehäuseteil ist in einer bevorzugten Ausgestaltung zu den Laufrädern hin seitlich geschlossen, mit Ausnahme eines Durchbruchs für vom Gehäuseinnern her beaufschlagte Drehblockierungs-Eingriffsteile, die auf die beidseitig des oberen Gehäuseteiles angeordneten Laufräder wirken. Das Gehäuseoberteil ist weiter gekammert ausgebildet, formt entsprechend einen oder mehrere Hohlräume aus, zur Aufnahme von Betätigungsstößel und ggf. weiterer Eingerichteteile, so insbesondere zur Aufnahme der die Drehblockierungs-Eingriffsteile beaufschlagenden Teile. Diese sind durch den weitestgehend seitlichen Verschluss des oberen Gehäuseteiles in diesem in einer geschützten Lage. Die beiden Gehäuseseitenteile des oberen Gehäuseteils sind tellerabschnittförmig gebildet und mit Bezug auf die Laufradachse zueinander beabstandet, wobei weiter das obere Gehäuseteil auch umfangsmäßig die beiden Seitenteile verbindend geschlossen ausgebildet ist.

Das Gehäuseunterteil ist demgegenüber mit Ausnahme von Durchgriffsbohrungen kammerfrei ausgebildet, formt entsprechend in Erstreckungsrichtung der Laufradachse betrachtet mittig einen kreisscheibenabschnittförmigen Träger, auf welchem umfangsmäßig eine Mantelwandung positioniert ist, deren in Laufradachs-Erstreckungsrichtung gemessene Breite der der Umfangsmantelfläche des oberen Gehäuseteils entspricht. Zugewandt dem Gehäuseoberteil trägt der scheibenabschnittförmige Träger einen sich in der Trennebene erstreckenden Boden zum Verschluss der Gehäuseoberteilkammern.

Das Unterteil ist bevorzugt mit zwei Durchgriffsbohrungen, die sich quer zur Laufradachse vom Gehäuseunterteilboden ausgehend nach unten erstrecken, versehen, wobei eine dieser Durchgriffsbohrungen mit einer dem Betätigungsstößel zugeordneten Einstellschraube fluchtet, entsprechend mit der Achse des Betätigungsstößels fluchtet. So ist eine Verstellung der Einstellschraube von der Radunterseite her durch die Durchgriffsbohrung durchführbar.

Bevorzugt ist der Betätigungsstößel und ggf. ein Laufradbremsteil und / oder eine Richtungs- oder Totalfeststellung nur in dem Gehäuseoberteil ausgebildet. Entsprechend ist die Bestückung mit diesen Einrichtungsteilen erleichtert, da diese bei getrennten Gehäuseteilen in einfachster Weise von unten in die zugehörigen Kammern des Gehäuseoberteils eingesetzt werden können, wonach der Verschluss der Kammern durch Aufsetzen des Gehäuseunterteils erfolgt. Diesbezüglich ist weiter vorgesehen, dass der Betätigungsstößel durch eine Stößelfeder in seine oberste Stellung vorgespannt ist und die Stößelfeder auf dem am Gehäuseunterteil ausgebildeten Boden aufliegt. Das Gehäuseteil ist bevorzugt hinsichtlich der Feststell- / Blockierungselemente nur mit der Stößelfeder belastet. Entsprechend formt das Gehäuseunterteil nicht nur einen Verschluss für die gehäuseoberteilseitigen Kammern aus, sondern zugleich auch die Abstützung für die funktionserforderliche Stößelfeder.

Es, wird auch vorgeschlagen, dass das Laufradbremsteil lediglich durch Federkraft, die von einer Nachstellfeder aufgebracht ist, gegen den Betätigungsstößel angedrückt ist und dass die Nachstellfeder als unterste Feder angeordnet ist. Entsprechend ist das Laufradbremsteil zwar mit dem Betätigungsstößel bewegungsgekoppelt, jedoch nicht starr angebunden. Insbesondere bei einer Verlagerung des Betätigungsstößels in Federentlastungsrichtung stellt die Feder das Laufradbremsteil entsprechend dem Stößelverlagerungsweg nach. Etwaig weiter vorgesehene Federn des Rollen-Eingerichtes sind oberhalb der Nachstellfeder vorgesehen, wodurch sich insgesamt eine Reduzierung der Rollen-Bauhöhe, insbesondere des Traggehäuses erreichen lässt.

Es erweist sich weiter von Vorteil, wenn sich die Nachstellfeder auf einem gehäusefesten, entsprechend nicht axial veränderbaren Boden abstützt. Dieser ist weiter bevorzugt unterhalb der Laufradachse ausgebildet, während in einer Ausführung des Gegenstandes die freie Stirnfläche des unteren freien Endes des Betätigungsstößels in jeder betrieblichen Axialstellung oberhalb der Laufradachse verläuft.

Um eine Rolle der in Rede stehenden Art weiter zu verbessern, wird vorgeschlagen, dass das Abdeckteil mit dem Laufradachskörper zumindest im Reibschluss verbunden ist und bei Benutzung die Laufradnabe sich relativ zum Abdeckteil dreht. Zufolge dieser Ausgestaltung ergibt sich bei Benutzung der Rolle eine relativ hohe Geschwindigkeit zwischen der umlaufenden Abdeckteil-Randkante und dem unmittelbar zugeordneten Abschnitt des Laufrades, wodurch weiter das Eindringen von Fäden oder dergleichen erschwert wird. Das mit dem Laufradachskörper verbundene Abdeckteil bleibt relativ zu dem sich drehenden Laufrad und der Laufradnabe stehen, was weiter auch das Erkennen von außen auf dem Abdeckteil aufgebrachten Informationen oder Logos erleichtert.

Es ist weiter vorgesehen, dass das Abdeckteil von einem transparenten Schutzteil überfangen ist. Dieses transparente Schutzteil lässt weiter den Blick auf das Abdeckteil zu. So können beispielsweise zwischen Abdeckteil und Schutzteile eingedrungene Fäden oder dergleichen erkannt werden. In Abhängigkeit von einem gewissen Verschmutzungsgrad kann das Schutzteil zur Entfernung der Fäden abgenommen werden. Auch ist durch das transparente Schutzteil beispielsweise ein Logo oder dergleichen auf dem relativ zu dem Laufrad stehen bleibenden Abdeckteil zu sehen.

Das Schutzteil ist mit der Laufradnabe mitdrehend angeordnet, so dass sich auch zwischen Abdeckteil und Schutzteil eine relativ hohe Umfangsgeschwindigkeit ergibt.

Das Abdeckteil ist durchmessermäßig so gewählt, dass dieses ausgehend von radial innen teilweise die Laufradnabe übergreift und so zumindest einen Schutz für zwischen Laufradachse und Laufradnabe angeordnete Kugellager oder dergleichen bietet. Das Schutzteil ist an der Laufradnabe rastgehaltert, so insbesondere im Bereich des Schutzteilumfangs, wobei weiter zur flüssigkeitsfesten Abdichtung von Laufradnabe und Laufradachse das Schutzteil umfangsmäßig entlang der Randkante beispielsweise mit einem Dichtelement zusammenwirken kann.

Die vorgeschlagene Lösung zur Anordnung eines Abdeckteils ist auch bei Doppelrollen der eingangs erwähnten Art anwendbar, wie auch die Merkmale der Erfindungen bezüglich der Doppelrollen auch bei einfachen Rollen zutreffen können.

Nachstehend ist die Erfindung anhand der beigefügten Zeichnung, welche lediglich ein Ausführungsbeispiel darstellt, näher erläutert. Es zeigt:
- Fig. 1: in perspektivischer Darstellung eine Doppelrolle;

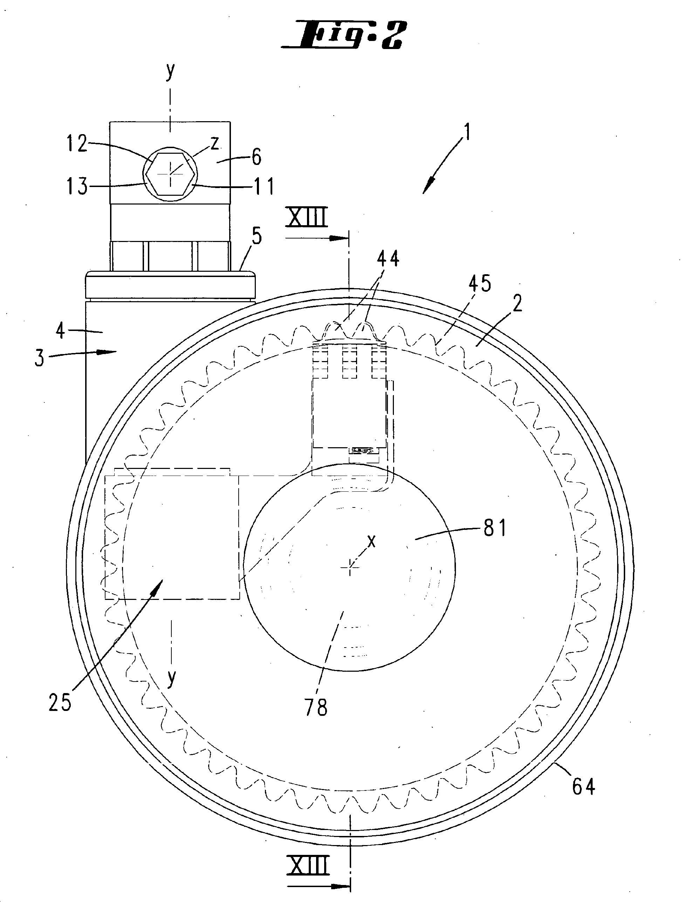

- Fig. 2: die Ansicht gemäß dem Pfeil II in Fig. 1;

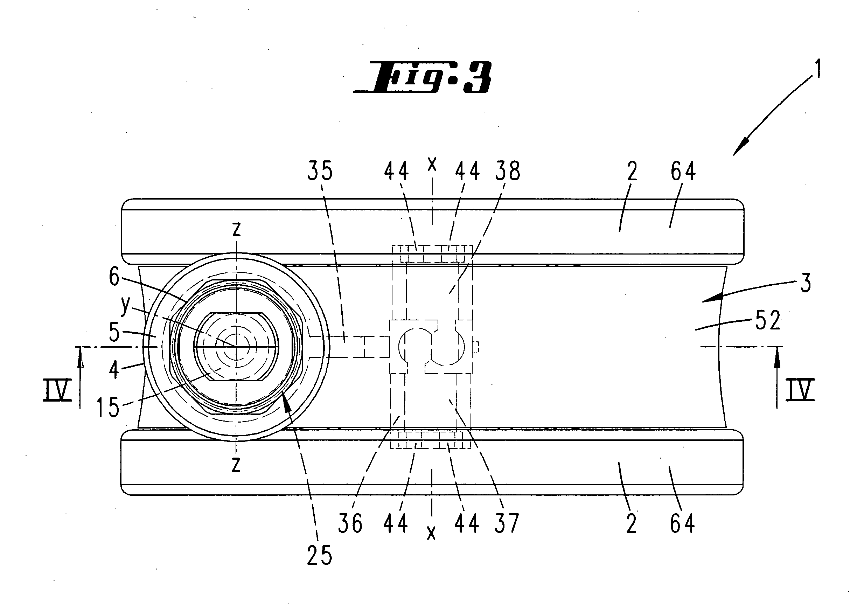

- Fig. 3: die Draufsicht auf die Doppelrolle;
- Fig. 4: den Schnitt gemäß der Linie IV - IV in Fig. 3, die Grundstellung, d.h. die vollständige Freigabestellung der Doppelrolle betreffend;
- Fig. 5: eine der Fig. 4 entsprechende Schnittdarstellung, jedoch die Total- feststellung betreffend;

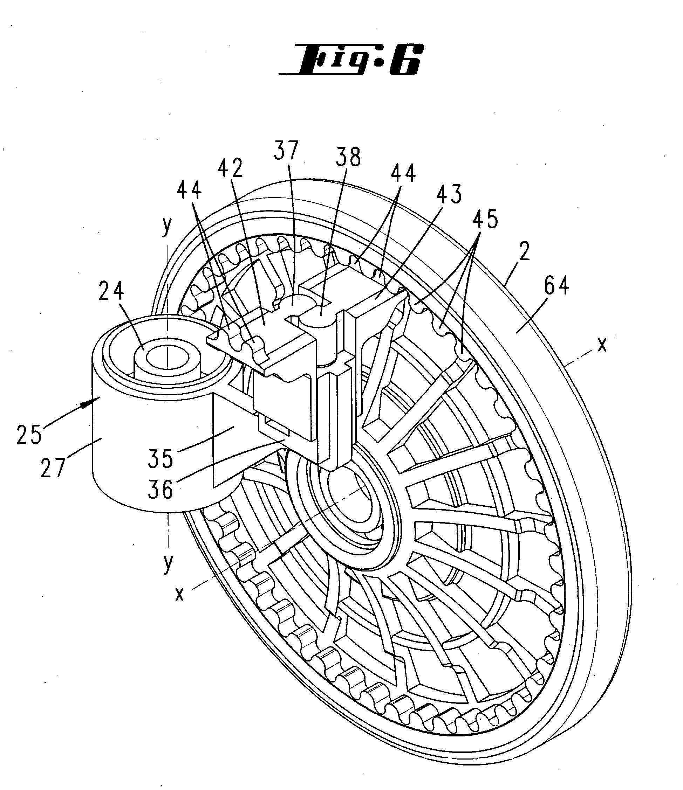

- Fig. 6: eine perspektivische Einzeldarstellung eines Laufrades der Dop- pelrolle mit Blick auf die Innenseite und einem mit Eingriffsteilen versehenen Laufradbremsteil zur Zusammenwirkung mit dem Laufrad;

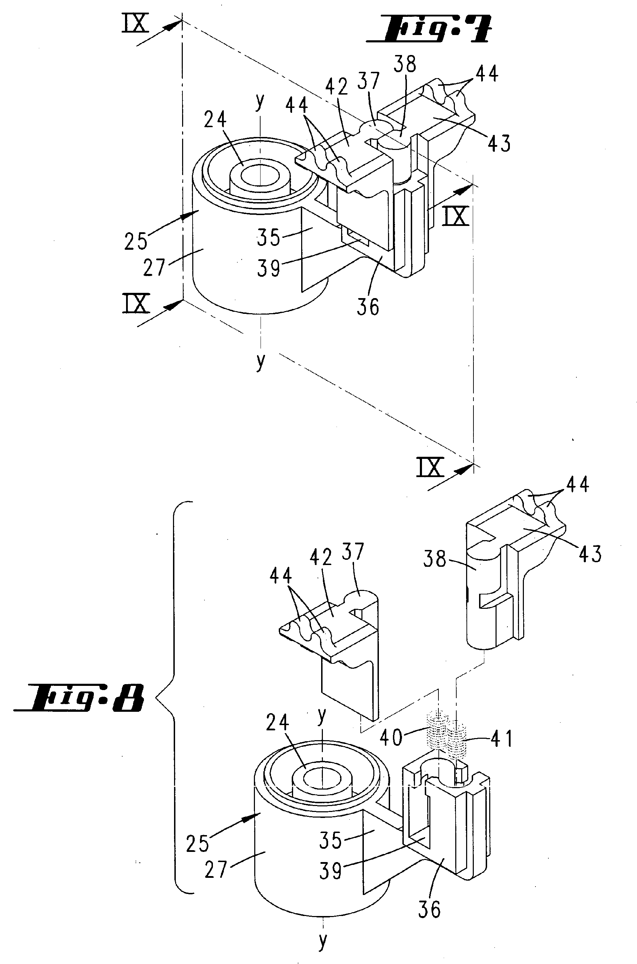

- Fig. 7: das Laufradbremsteil mit den Eingriffsteilen in einer perspektivi- schen Einzeldarstellung;
- Fig. 8.: das Laufradbremsteil mit den Eingriffsteilen in einer Explosions- darstellung;

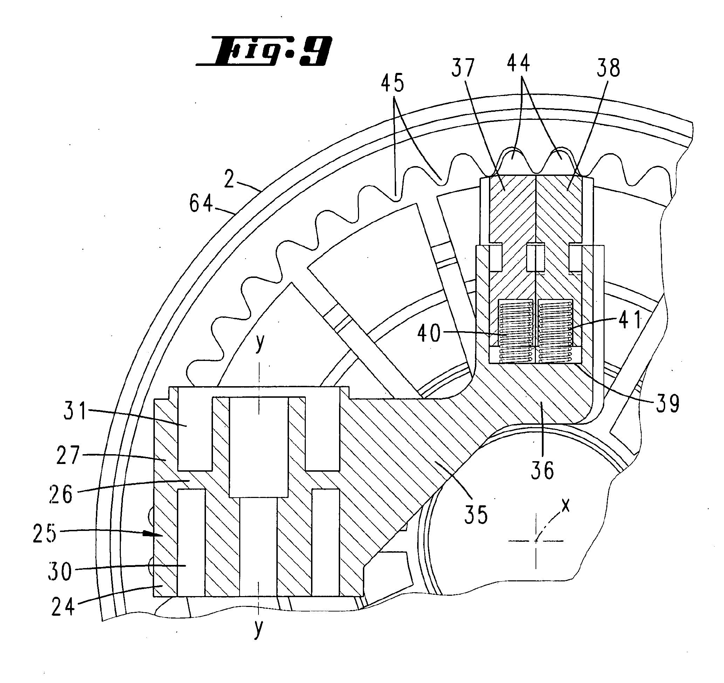

- Fig. 9: eine Ausschnittdarstellung, die Zusammenwirkung von Laufrad- bremsteil bzw. Eingriffsteilen und einer Verzahnung des zuge- ordneten Laufrades betreffend, dies weiter unter Fortlassung wei- terer Gehäuse- und Eingerichteteile der Doppelrolle;
- Fig. 10: eine weitere der Fig. 4 entsprechende Schnittdarstellung, jedoch eine Richtungsfeststellung betreffend;
- Fig. 11: eine vergrößerte Darstellung des Bereiches XI in Fig. 10;
- Fig. 12: eine der Fig. 9 entsprechende Darstellung, jedoch die Betriebsstel- lung gemäß Fig. 10 betreffend;
- Fig. 13: den Schnitt gemäß der Linie XIII - XIII in Fig. 2, betreffend die Totalfeststellung gemäß der Darstellung in Fig. 5;

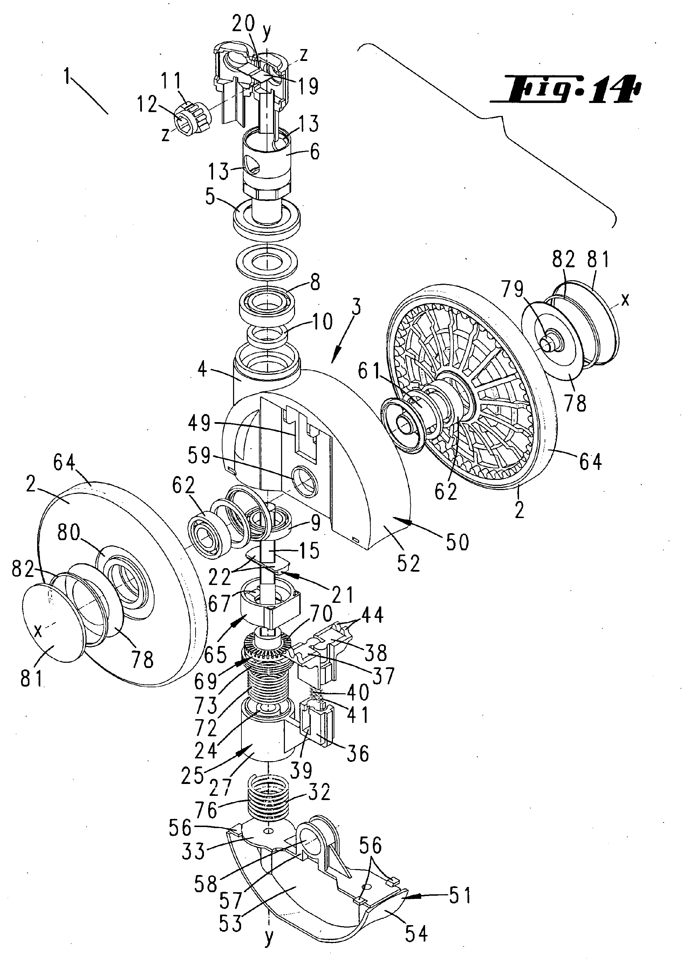

- Fig. 14: die Doppelrolle in einer perspektivischen Explosionsdarstellung.

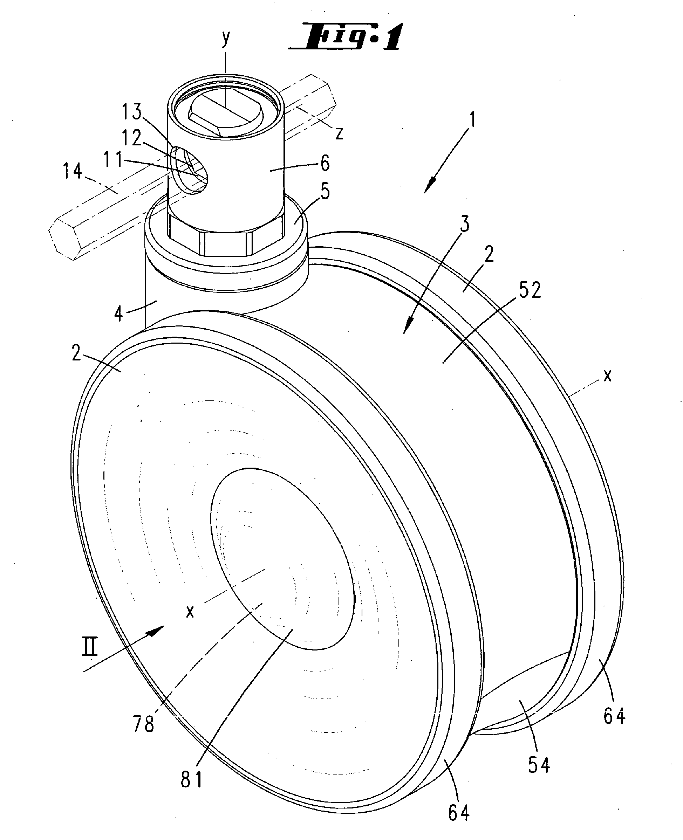

Dargestellt und beschrieben ist zunächst mit Bezug zu Fig.1 eine Doppelrolle 1 mit zwei Laufrädern 2 und einem Traggehäuse 3.

Das Traggehäuse 3 weist zunächst einen kreiszylinderabschnittförmigen Bereich auf, an dessen beiden Seitenflächen jeweils ein Laufrad 2 angeordnet ist. Die Laufradachse x durchsetzt entsprechend den Kreiszylinderabschnitt des Traggehäuses 3 zentral.

Von diesem Kreiszylinderabschnitt des Traggehäuses 3 ausgehend wächst etwa tangential ein Traggehäuseabschnitt 4 aus. Dieser ist als Kreishohlzylinder gebildet, mit einer Zylinderachse, die senkrecht zur Laufradachse x ausgerichtet ist. Der Außendurchmesser dieses Traggehäuseabschnittes 4 entspricht im Wesentlichen der in Laufradachsenrichtung gemessenen Breite des Kreiszylinderabschnitts des Traggehäuses 3.

Die freie Stirnebene des hohlzylindrischen Traggehäuseabschnittes 4 erstreckt sich mit geringem Abstand zu einer gedachten parallel verlaufenden, die Laufradflächen im Zenit tangierenden Ebene, so in dem dargestellten Ausführungsbeispiel mit einem Überragmaß a von 1 - 4 mm.

Über diese freie Stirnfläche 5 des Traggehäuseabschnittes 4 hinaus ist ein gleichfalls im Wesentlichen als Hohlzylinder ausgebildeter Montagezapfen 6 ausgebildet. Dieser ist koaxial zum Traggehäuseabschnitt 4 ausgerichtet und taucht mit einem gegenüber dem sichtbaren Bereich durchmesserverringerten Abschnitt 7 in den Traggehäuseabschnitt 4 ein. Eine Radialabstützung erfährt der Montagezapfen 6 gegen die Innenwandung des Traggehäuseabschnittes 4 durch zwei Kugellager 8 und 9. Diese sind in Axialrichtung des Traggehäuseabschnittes 4 betrachtet nur durch Beabstandung mittels eines Zwischenrings 10 annähernd unmittelbar untereinander angeordnet.

Dieser Zwischenring 10 weist eine axiale Höhe auf, die etwa der eines der Kugellager 8 bzw. 9 entspricht.

Das axial äußere, d.h. der freien Stirnfläche 5 unmittelbar zugewandte obere Kugellager 8 ist gegenüber dem Kugellager 9 durchmesservergrößert, weist entsprechend auch durchmessergrößere Lagerkugeln auf. Das untere Kugellager 9 ist dem freien Endbereich des Abschnitts 7 des Montagezapfens 6 zugeordnet.

Zufolge dieser Anordnung ist der Montagezapfen 6 frei um eine den Traggehäuseabschnitt 4 zentral durchsetzende Achse y gegenüber dem Traggehäuse 3 schwenkbar.

In dem Montagezapfen 6 ist ein Steuernocken 11 gehaltert. Dieser ist um eine quer zur Rollen-Schwenkachse y ausgerichtete Achse z schwenkbar, wobei die Achse z eine Sechskantaufnahme 11 des Steuernockens 11 zentral durchsetzt. In beidseitiger Verlängerung dieser Sechskantaufnahme 12 weist der den Steuernocken 11 umgebende Montagezapfen 6 Durchtrittsöffnungen 13 auf zum Eingriff eines auf den Steuernocken 11 einwirkenden Werkzeugs 14 oder dergleichen.

Der Steuernocken 11 wirkt auf einen die Schwenkachse y mittig aufnehmenden Betätigungsstößel 15. Dieser ist langgestreckt stabförmig ausgebildet mit einem im Zusammenwirkungsbereich mit dem halsartigen Abschnitt 7 des Montagezapfens 6 ausgeformten Vierkantquerschnitt. Der Betätigungsstößel 15 ist hierüber formschlüssig, drehfest aber axial relativ verlagerbar mit dem Montagezapfen 6 verbunden.

Auf die obere freie Stirnfläche 16 des Betätigungsstößels 15 wirkt der Steuernocken 11 mit, mit Bezug zu der Drehachse z auf unterschiedlichen Durchmesserlinien angeordneten Steuerflächen 17,17' und 17" zusammen, zur unterschiedlichen axialen Ausrichtung des Betätigungsstößels 15.

In Abhängigkeit von den über den Umfang betrachteten Abständen der Steuerflächen 17,17' und 17" sind im Wesentlichen gegenüberliegend zu diesen radial vorstehende, auf einer gemeinsamen Radiuslinie liegende Rastvorsprünge 18, 18', 18" an dem Steuernocken 11 ausgeformt. Diese wirken mit einer oberhalb des Steuernockens 11 in den Bewegungsweg der Rastvorsprünge bei einer Verdrehung des Betätigungsstößels 15 greifenden Blattfeder 19 zusammen, die kopfseitig des Montagezapfens 6 gehaltert ist. Die Blattfeder 19 besitzt mittig eine an die Formgebung der Rastnocken 18,18', bzw. 18" angepasste Einsenkung 20.

Der Betätigungsstößel 15 formt unterhalb der durch Montagezapfen-Abschnitt 7 und die Kugellager 8 und 9 gebildeten Kippsicherung desselben ein Richtungsfeststellteil 21 aus. Dieses ist in dem dargestellten Ausführungsbeispiel gebildet durch zwei mit Bezug zu der Schwenkachse y diametral gegenüberliegend angeordnete, vom Stößelstab nach radial außen sich erstreckende Flügelabschnitte 22, deren Radialerstreckung angepasst ist an das Öffnungsinnenmaß des hohlzylindrisch gestalteten Traggehäuseabschnittes 4 im oberen, d.h. insbesondere dem Kugellager 9 zugeordneten Bereich.

Der Betätigungsstößel 15 erstreckt sich über das Richtungsfeststellteil 21 nach unten hinaus, wobei das diesbezügliche, nach unten weisende und somit dem Steuernocken 11 abgewandte Ende des Betätigungsstößels 15 unabhängig von der über den Steuernocken 11 gewählten Axialstellung in einer Ebene oberhalb der Laufradachse x angeordnet ist.

Dieses freie Ende 23 des Betätigungsstößels 15, der im Übrigen unterhalb des Richtungsfeststellteils 21 im Querschnitt kreisscheibenförmig gebildet ist mit einem Durchmesser, der etwa dem halben Öffnungsdurchmesser des Traggehäuseabschnittes 4 entspricht, ist radial abgestützt durch Aufnahme in einem zentralen Hohlzylinderabschnitt 24 eines vorgesehenen Laufradbremsteils 25. Dieser Hohlzylinderabschnitt 24 ist über einen etwa mittig der Axialerstreckung des Hohlzylinderabschnitts 24 angeordneten Radialkragen 26 mit einem radial äußeren Zylinderring 27 verbunden. Dieser weist einen an den Öffnungsdurchmesser des Traggehäuseabschnittes 4 angepassten Außendurchmesser auf, ist entsprechend in dem Traggehäuseabschnitt 4 geführt.

In dem zentralen Hohlzylinderabschnitt 24 des Laufradbremsteiles 25 ist zudem eine die Schwenkachse y zentral aufnehmende, mit ihrem nach oben weisenden freien Ende auf die Stirnfläche des freien Endes 23 des Betätigungsstößels 15 einwirkende Einstellschraube 28 gewindeverstellbar aufgenommen. Die Schraubwerkzeugöffnung 29 weist nach unten.

Über die Einstellschraube 28 lässt sich der relative Axialabstand von Laufradbremsteil 25 zu dem Betätigungsstößel 15 verändern.

Zwischen dem zentralen Hohlzylinderabschnitt 24 und dem radial äußeren Zylinderring 27 stellen sich in Axialrichtung getrennt durch den Radialkragen 26 Ringräume 30, 31 ein, wobei der Ringraum 30 nach unten und der Ringraum 31 nach oben hin geöffnet ist.

In den unteren Ringraum 30 greift eine zylinderartige Stößelfeder 32 ein. Diese stützt sich einerends unterseitig an dem Radialkragen 26 des Laufradbremsteiles 25 ab und anderends auf einem in einer Parallelebene zum Radialkragen 26 und somit sich senkrecht zur Schwenkachse y erstreckenden Boden 33 des Traggehäuses 3.

Der Boden 33 ist in Verlängerung der Drehachse y mit einer Durchgriffsbohrung 34 versehen. Diese fluchtet entsprechend mit der Einstellschraube 28, womit letztere von außen über ein Werkzeug zugänglich ist

Über die Stößelfeder 32 ist der Betätigungsstößel 15 mittelbar über das Laufradbremsteil 25 und die Einstellschraube 28 nach oben in Richtung auf den Steuernocken 11 vorgespannt.

An dem Laufradbremsteil 25, insbesondere an dem Zylinderring 27 ist außenseitig zum Rolleninneren hin gewandt ein Ausleger 35 angeformt. Dieser trägt endseitig in üblicher Rollen-Betriebsausrichtung oberhalb der Laufradachse x einen sich nach oben im Querschnitt U-förmig sich öffnenden Halter 36, zur Aufnahme von zwei zur Einwirkung auf die Laufräder 2 geeigneten Eingriffsteilen 37, 38. Diese Eingriffsteile 37, 38 sind in dem Halter 36 mit Bezug auf die Laufradachse x in Radialausrichtung verlagerbar, wobei der Verlagerungsweg nach radial außen, d.h. vom Halterungsboden 39 weggerichtet anschlagbegrenzt ist. In diese Richtung nach radial außen sind die Eingriffsteile 37, 38 durch jeweils eine sich auf dem Halterungsboden 39 abstützende Druckfeder 40, 41 belastet. Die Radialausrichtung ist parallel zur Ausrichtung der Schwenkachse y gewählt.

Jedes Eingriffsteil 37, 38 weist weiter im Bereich des über den Halter 36 hinausragenden, oberen Bereiches einen parallel zur Laufradachse x ausgerichteten Schenkel 42, 43 auf. Diese beiden Schenkel 42, 43 erstrecken sich ausgehend von einer senkrecht zur Laufradachse x ausgerichteten Mittelebene der Doppelrolle 1 beidseitig des Halters 36 in entgegengesetzte Richtungen, wobei an den freien Endrandkanten weiter nach oben ragende Eingriffszähne 44 angeformt sind. In dem dargestellten Ausführungsbeispiel trägt jedes Eingriffsteil 37 und 38 zwei solcher Eingriffszähne 44. Diese sind ausgebildet zur Zusammenwirkung mit jeweils einer laufradinnenseitig vorgesehenen, umlaufenden Verzahnung 45. Die Anordnung ist weiter so gewählt, dass ein Zusammenwirken von Eingriffszähnen 44 und Laufradverzahnung 45 mit Bezug zur Laufradachse x in der üblichen Rollen-Benutzungsausrichtung im Zenit des jeweiligen Laufrads 2 erfolgt. Die laufradseitige Verzahnung 45 ist randnah vorgesehen; entsprechend aufweisend einen an den Laufraddurchmesser angepassten Verzahnungsringdurchmesser.

Der Ausleger 3.5 durchsetzt den hohizylinderförmigen Traggehäuseabschnitt 4 im Bereich eines entsprechend vorgesehenen und die Axialverlagerung des Laufradbremsteiles 25 zulassenden Schlitzes 46. Weiter liegt der Ausleger 35 nach Durchsetzen des Schlitzes 46 in einer mittleren Kammer 47 des Traggehäuses 3 ein, welche Kammer 47 in Erstreckungsrichtung der Laufradachse x betrachtet bei insgesamt mittiger Ausrichtung schmaler gestaltet ist als der Traggehäuseabschnitt 4 und auch die diesen Traggehäuseabschnitt 4 gegenüberliegende weitere Kammer 48.

Die mittlere Kammer 47 besitzt zum Durchtritt insbesondere der Schenkel 42, 43 der Eingriffsteile 37, 38 entsprechend ausgeformte und ausgerichtete seitliche Fensteröffnungen 49.

Das Traggehäuse 3 ist des Weiteren im Wesentlichen zweigeteilt ausgebildet, nämlich aufweisend ein Gehäuseoberteil 50 und ein Gehäuseunterteil 51, wobei das Gehäuseoberteil 50 den Traggehäuseabschnitt 4, die mittlere Kammer 47 und die weitere Kammer 48 bildet. Das Traggehäuse 3 ist zur Trennung von Gehäuseoberteil 50 und Gehäuseunterteil 51 horizontal getrennt, wobei die Trennebene T unterhalb der Laufradachse x gewählt ist.

Traggehäuseabschnitt 4 sowie die Kammern 47 und 48 des Gehäuseoberteils 5 sind nach unten hin, d.h. zur Trennebene T hin offen gestaltet. Nach radial außen sind die Kammern überdeckt durch eine integral mit dem Traggehäuseabschnitt 4 und den die Kammern unterteilenden Stegen gefertigte Umfangswandung 52.

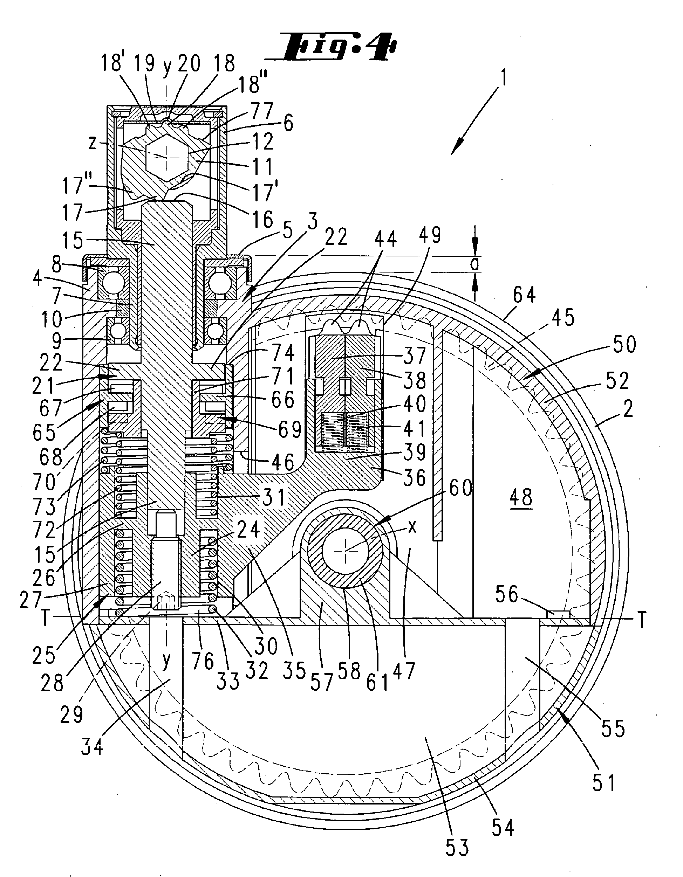

Das Gehäuseunterteil 51 weist einen in Ausrichtung der Laufradachse x betrachteten mittig angeordneten Wandungssteg 53 auf. Dieser füllt in einem Querschnitt gemäß der Darstellung in Fig. 4 den gesamten unteren Teil des Gehäuses 4 und trägt radial außen einen Umfangswandungsabschnitt 54, der in zusammengesetztem Zustand des Gehäuses 3 in Verlängerung der Umfangswandung 52 des Gehäuseoberteils 50 verläuft.

Der Boden 33 ist an dem Gehäuseunterteil 51 gebildet; ist entsprechend auf dem senkrecht zur Laufradachse ausgerichteten Wandungssteg 53 aufgebracht, dies weiter unter einstückiger Ausbildung des gesamten Gehäuseunterteils 51. Die Durchgriffsbohrung 34 durch den Boden 33 ist geradlinig nach außen durch den Wandungsabschnitt 54 geführt. Eine weitere Durchgangsbohrung 55 verbindet gleichfalls geradlinig die weitere Kammer 48 mit der Umgebung.

Das Gehäuseunterteil 51 ist über nicht näher dargestellte Rastmittel 56 an dem Gehäuseoberteil 50 festgelegt.

Darüber hinaus ist eine Steck-Formschlussverbindung zwischen Gehäuseoberteil 50 und Gehäuseunterteil 51 vorgesehen, wozu das Gehäuseunterteil 51 einen in die mittlere Kammer 47 einragenden Nabenabschnitt 57 aufweist, der sich senkrecht vom Boden 33 abragend erstreckt. Dieser Nabenabschnitt 57 weist eine Achsdurchführungsöffnung 58 auf. Diese Öffnung nimmt in der zusammengesetzten Stellung des Gehäuses 3 zentral die Laufradachse x auf. Koaxial zu dieser Achsdurchführungsöffnung 58 weisen auch die die Kammer 47 begrenzenden Gehäusewandungen durchmesserangepasste Durchtrittsöffnungen 59 auf. Die die Achsdurchführungsöffnungen 58 und die Durchtrittsöffnungen 59 von Gehäuseoberteil 50 und Gehäuseunterteil 51 umgebenden Gehäuseabschnitte formen jeweils einen Teil der Achskörperaufnahme 60 aus.

Der Achskörper 61 ist in Form einer Hohlachse ausgebildet. Dieser ist in der Achskörperaufnahme 60 des Gehäuses 3 reibschlussgehaltert. Auch eine formschlüssige Festlegung ist möglich. Der Achskörper 61 ragt in Laufradachserstreckung beidseitig der Achskörperaufnahme 60 des Gehäuses 3 hinaus und trägt jeweils endseitig ein Kugellager 62, auf welches jeweils die Laufradnabe 63 eines Laufrades 62 aufgeprellt ist. Die Lauffläche 64 eines jeden Laufrades 2 ragt radial über die Umfangswandung 52 des Gehäuses 3 hinaus.

Die Laufräder 2 sind zufolge der vorbeschriebenen Anordnung unabhängig voneinander drehbar auf dem Achskörper 61 gelagert.

Der Achskörper 61 ist jeweils axial außen mit einem Abdeckteil 78 versehen. Dieses ist zunächst scheibenförmig ausgebildet und weist nach innen, zum reibschlüssigen Eingriff in die Achskörperhöhlung einen zentralen Zapfen 79 auf.

Das Abdeckteil 78 ist durchmessermäßig so gewählt, dass dieses den Nabenbereich des jeweiligen Laufrades 2, so weiter insbesondere auch den Kugellagerbereich übergreift. Die Abdeckteil-Randkante taucht in einen laufradnabenseitig vorgesehenen ringförmigen Vertiefungsbereich 80 ein.

Zufolge der reibschlüssigen Halterung des Achskörpers 61 im Bereich der traggehäuseseitigen Nabe und der weiter vorgesehenen Reibschlusshalterung des Abdeckteils 78 an dem Achskörper 61 bleibt das Abdeckteil 78 bei freier Drehbeweglichkeit der Laufräder 2 über die Kugellager 62 bevorzugt stehen, dreht sich entsprechend nicht.

Das Abdeckteil 78 ist überfangen von einem transparenten Schutzteil 81. Dieses ist tellerartig konvex gekrümmt und im Bereich des radial äußeren umlaufenden Randes des Vertiefungsbereiches 80 rastgehaltert, in welchem Rastbereich zur flüssigkeitsdichten Ausgestaltung eine Dichtung 82 vorgesehen ist. Entsprechend kann keine Flüssigkeit in den Nabenbereich und somit in den Bereich der Kugellager 62 gelangen. Die dargestellte Doppelrolle 1 ist zufolge dieser Ausgestaltung waschfest.

Der gegen die Stößelfeder 32 in Axialrichtung abwärts verlagerbare Betätigungsstößel 15 wirkt in einer Stellung des Steuernockens 11 mit seinem Richtungsfeststellteil 21 mit einem in dem Traggehäuseabschnitt 4 aufgenommenen Feststellgegenteil 65 zusammen. Letzteres ist drehgehindert in der auch von dem Betätigungsstößel 15 durchsetzten Gehäuseöffnung bei axialer Verlagerbarkeit gehaltert, dies weiter in einem gegenüber dem Außendurchmesser des Richtungsfeststellteils 21 durchmesservergrößerten Üffnungsbereichs des Traggehäuseabschnittes 4. Das Feststellgegenteil 65 weist eine angepasst an das zuvor beschriebene Durchmesserdifferenzmaß angepasste Mantelwandung 66 auf, von der nach radial innen in Axialrichtung betrachtet mittig ein von dem Stößelstab durchsetzter Feststellboden 66 ausgeht. Dieser Feststellboden 66 weist zugewandt dem Richtungsfeststellteil 21 zwei im Grundriss an die Flügelabschnitte 22 angepasste Vertiefungen 67 auf.

Unterseitig ist der Feststellboden 66 mit einer umlaufenden Verzahnung 68 versehen zur Zusammenwirkung mit einem im Wesentlichen unterhalb des Feststellgegenteils 65 koaxial zu diesem ausgerichtet angeordneten Schwenkblockierungsteil 69. Letzteres weist zugewandt dem Feststellgegenteil 65 eine Fläche mit einer Gegenverzahnung 70 auf.

Das Schwenkblockierungsteil 69 besitzt einen die zentrale, den Betätigungsstößel 15 aufnehmende Öffnung umgebenden Kragen 71. Dieser erstreckt sich ausgehend vom Schwenkblockierungsteil 69 nach oben zur Abstützung an der Unterseite der Flügelabschnitte 22 des Richtungsfeststellteils 21, dies weiter bei Durchsetzung des Feststellbodens des Feststellgegenteils 65 durch den Kragen 71.

Feststellgegeriteil 65 und Schwenkblockierungsteil 69 sind in Richtung auf das Richtungsfeststellteil 21 vorgespannt, wozu jedes Teil eine Zylinderfeder aufweist. So ist das Schwenkblockierungsteil 69 mittels einer zweiten Vorspannfeder 72 gegen das Richtungsfeststellteil 21 belastet. Diese zweite Vorspannfeder 72 stützt sich an dem Schwenkblockierungsteil 69 auf der der Gegenverzahnung 70 abgewandten Unterseite ab. Anderendig tritt die zweite Vorspannfeder 72 in den Ringraum 31 des Laufradbremsteiles 25 ein, zur Abstützung auf dem Radialkragen 26. Die zweite Vorspannfeder 72 wirkt in dieselbe Richtung wie die Stößelfeder 32.

Konzentrisch zur zweiten Vorspannfeder 72 ist eine erste Vorspannfeder 73 vorgesehen. Diese stützt sich auf der zugewandten oberen Stirnfläche des Zylinderrings 27 des Laufradbremsteils 25 ab und belastet die Wandung des Feststellgegenteils 65 unterseitig zur Vorspannung des Feststellgegenteils 65 in Richtung auf den Steuernocken 11, wobei das Feststellgegenteil 65 eine Abstützung in dem Gehäuse 3 bzw. dem Gehäuseabschnitt 4 im Bereich einer Gehäuseschulter 74 erfährt.

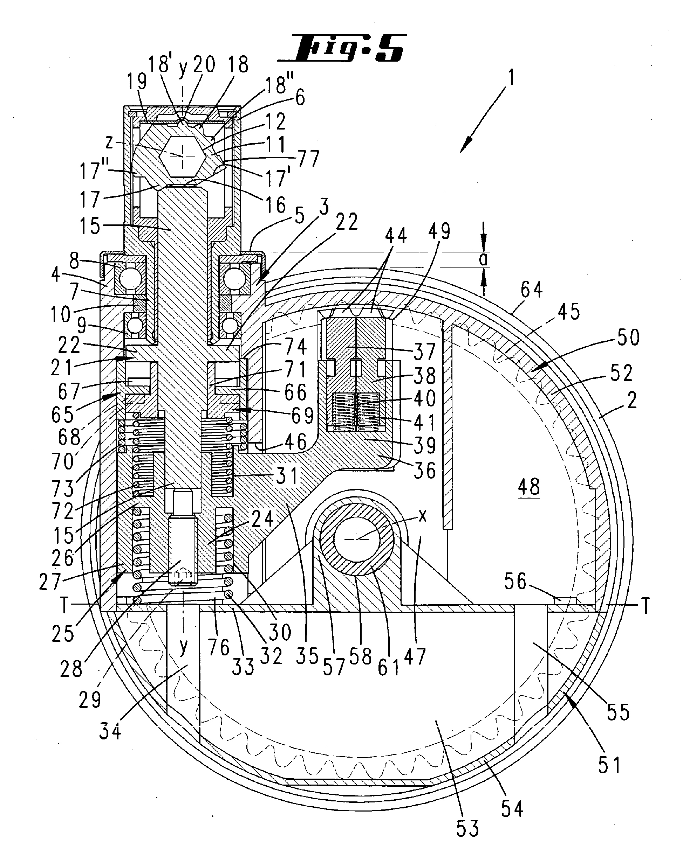

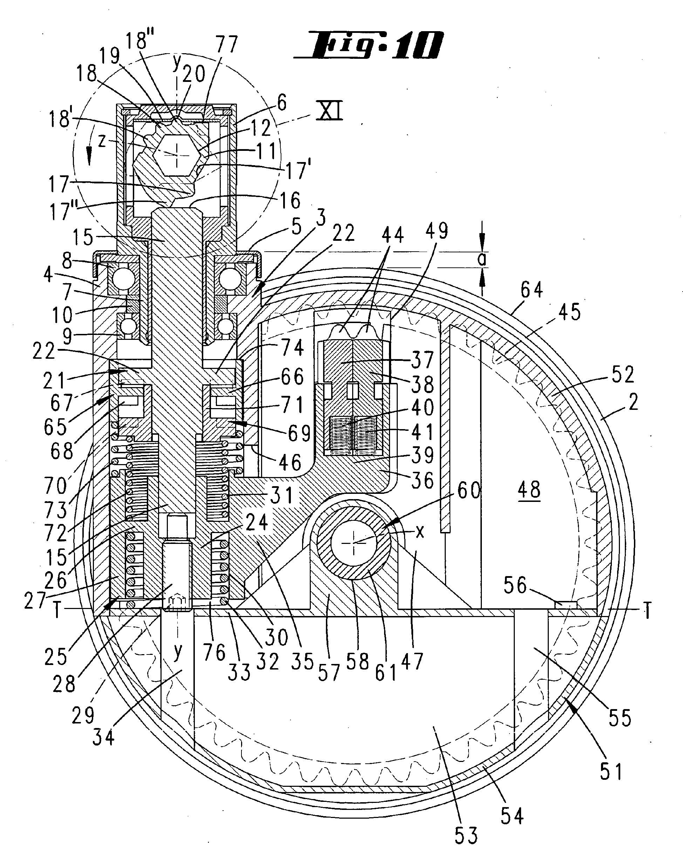

Über den um die Achse z drehbaren Steuernocken 11 ist die Doppelrolle 1 in unterschiedliche Funktionsstellungen bringbar, so in eine wie in Fig. 4 dargestellten Neutralstellung (Lenkrollenstellung), einer in Fig. 5 dargestellten Totalfeststellung sowie in eine in Fig. 10 dargestellten Bockrollenstellung.

In der Neutralstellung bzw. Lenkrollenstellung gemäß Fig. 4 sind die Laufräder 2 frei drehbar um ihre Laufradachse x und sogleich die gesamte Rolle frei schwenkbar um die Schwenkachse y. Dies ist erreicht durch Verbringen des Steuernockens 11 in eine mit Bezug auf die Verschwenkbarkeit desselben betrachteten Mittelstellung, in welcher der mittlere Rastnocken 18 in die zugeordnete Einsenkung 20 der Blattfeder 19 eingreift. Die gegenüberliegend zugeordnete Steuerfläche 17 wirkt auf die Stirnfläche 16 des Betätigungsstößels 15, dessen Richtungsfeststellteil 21 in dieser Neutralstellung der Doppelrolle 1 mit axialem Abstand oberhalb der Vertiefungen 67 des Feststellgegenteils 65 verbleibt. Entsprechend sind Feststellgegenteil 65 und Richtungsfeststellteil 21 nicht in Eingriff.

Über das Richtungsfeststellteil 21 des Betätigungsstößels 15 ist auch das Schwenkblockierungsteil 69 mitgeschleppt in eine zu dem Feststellgegenteil 65 axial beabstandete Stellung, so dass auch zwischen diesen Teilen kein Formschluss erreicht ist. Demzufolge ist die freie Schwenkbeweglichkeit der Rolle um die Achse y erreicht.

Über den Betätigungsstößel 15 ist weiter entgegen der Kraft der Stößelfeder 32 über die Einstellschraube 28 auch das Laufradbremsteil 25 in eine Axialstellung verbracht, in welcher die Eingriffszähne 44 der Eingriffsteile 37, 38 in einer Beabstandungsstellung zu den laufradseitigen Verzahnungen 45 treten, wodurch die freie Drehbeweglichkeit der Laufräder 2 erreicht ist.

Aus der Neutralstellung heraus ist durch Drehen des Steuernockens 11 in die eine oder in die andere Richtung, d.h. mit Betrachtung der Darstellungen in den Figuren 4,5 und 10 in oder gegen Uhrzeigerrichtung, entweder die Totalfeststellung oder die Bockrollenstellung erreichbar.

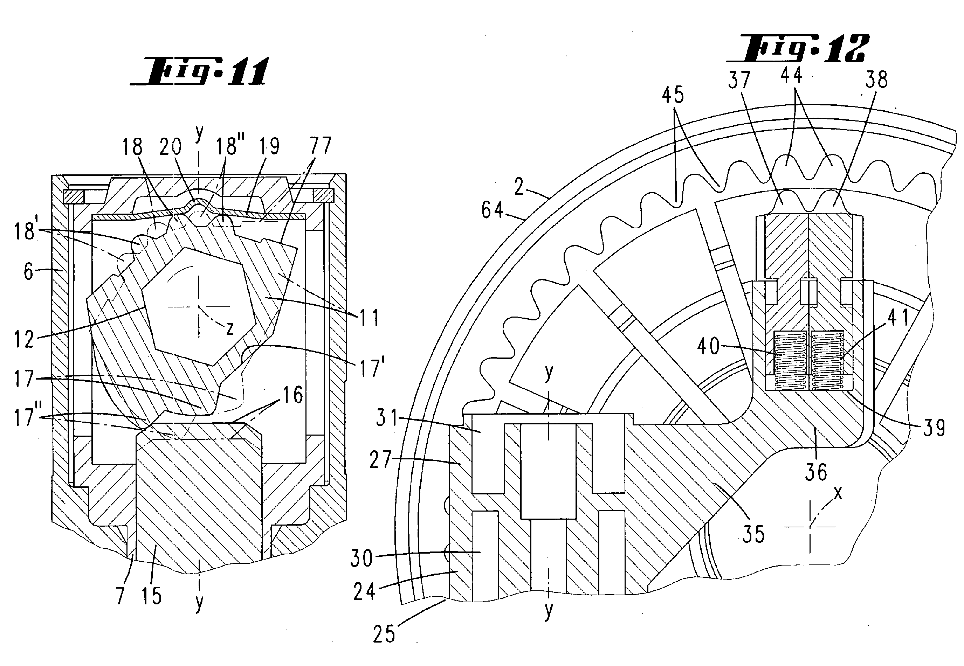

In Fig. 5 ist die Totalfeststellung der Doppelrolle 1 dargestellt. Der Steuernocken 11 ist mit Bezug auf die Darstellung in Uhrzeigerrichtung um die Achse z aus der Neutralstellung gemäß Fig. 4 verdreht. Der zugeordnete Rastnocken 18' ist unter zwischenzeitig federnden Ausweichen der Blattfeder 19 gemäß der Darstellung in Fig.11 in die zugeordnete Einsenkung 20 eingefahren. Diese Steuernocken-Drehendstellung ist anschlagbegrenzt. Eine entsprechend ausgeformte Anschlagfläche 75 tritt hierbei unterseitig gegen einen in dem Montagezapfen 6 abgestützten Endabschnitt der Blattfeder 19.

Durch die Verschwenkung des Steuernockens 11 wird die Steuerfläche 17' des Steuernockens 11 in Wirkstellung verbracht, welche einen axialen Verlagerungsweg des Betätigungsstößels 15 nach oben, d.h. in Richtung auf den Steuernocken 11 zulässt. Entsprechend verfährt der Betätigungsstößel 15 unterstützt durch die eine Nachstellfeder 76 bildende Stößelfeder 32 anschlagbegrenzt nach axial oben, wobei die Anschlagbegrenzung dadurch gebildet ist, dass das angeformte Richtungsfeststellteil 21 gegen den in den Traggehäuseabschnitt 4 einragenden freien Halsabschnitt 7 des Montagezapfens 6 unterhalb der Kugellageranordnung tritt. Der axiale Verlagerungsweg des Betätigungsstößels aus der Neutralstellung gemäß Fig. 4 in die Totalfeststellung gemäß Fig. 5 beträgt in dem dargestellten Ausführungsbeispiel etwa 4 mm.

Bedingt durch die axiale Aufwärtsverlagerung des Betätigungsstößels 15 tritt das wiederum in Richtung auf den Steuernocken 11 über die zweite Vorspannfeder 72 belastete Schwenkblockierungsteil 69 mit der ausgeformten Gegenverzahnung 70 in die Verzahnung 68 des Feststellgegenteils 65 ein. Über die vorgesehene Mehrzahl von Einzelzähnen hinsichtlich der Verzahnung 68 und der Gegenverzahnung 70 ist eine Schwenkblockierung der Doppelrolle 1 in nahezu jeder Rollenschwenkstellung möglich. Hierzu weist das Schwenkblockierungsteil 21 in dem dargestellten Ausführungsbeispiel gleichmäßig über den Umfang verteilt zweiunddreißig Zähne auf, zur Zusammenwirkung mit einer entsprechenden Anzahl von Zahnlücken in dem Feststellgegenteil 65, woraus eine Schwenkfeststellung der Rolle 1 in zweiunddreißig Schwenkpositionen erreicht werden kann.

Sofern aus einer Schwenkstellung der Doppelrolle 1 eine solche Blockierung erfolgen soll, in welcher die-Gegenverzahnung 70 des Schwenkblockierungsteiles 69 gegen die Verzahnung 68 des Feststellgegenteils 65 treten, kann zufolge der Anordnung der zweiten Vorspannfeder 72 der Betätigungsstößel 15 dennoch in seine anschlagbegrenzte Position nach axial oben verfahren. Die zweite Vorspannfeder 72 dient hierbei als Ausgleichsfeder zur nachträglichen axialen Verlagerung des Schwenkblockierungsteiles 69 in die Formschlussstellung zum Feststellgegenteil 65 nach einer leichten Verschwenkung der Doppelrolle 1, wonach die Verzahnungen selbsttätig über die zweite Vorspannfeder 72 in Eingriff gelangen.

Infolge der Verlagerung des Steuernockens 11 in die in Fig. 5 dargestellte Stellung wird die eine Nachstellfeder 76 ausformende Stößelfeder 32 entlastet, was die axiale Aufwärtsverlagerung des Laufradbremsteiles 25 und über die in diesem schraubgehalterte Einstellschraube 28 die des Betätigungsstößels 15 bewirkt. Über das Laufradbremsteil 25 werden zudem auch die beiden Vorspannfedern 72 und 73 mit verlagert. Während die erste, mit dem Feststellgegenteil 65 zusammenwirkende erste Vorspannfeder zufolge der Aufwärtsverlagerung des Laufradbremsteiles 25 gestaucht wird, wird die zweite Vorspannfeder 72 unter der Voraussetzung, dass die Gegenverzahnung 70 des Schwenkblockierungsteils 69 auf Lücke zu der Verzahnung 68 des Feststellgegenteils 65 steht, ohne weitere Stauchbeanspruchung lediglich in Axialrichtung bewegt.

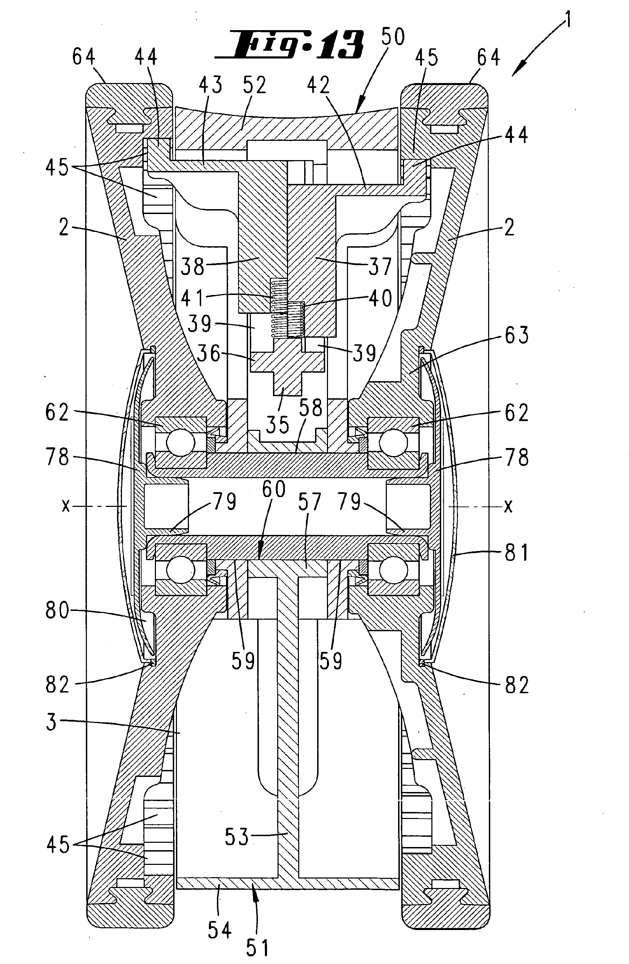

Weiter werden über das Laufradbremsteil 25 auch die Eingriffsteile 37, 38 parallel zur Ausrichtung des Betätigungsstößels 15 verlagert derart, dass die Eingriffszähne 44 mit Bezug auf die Laufraddrehachse x nach radial außen bewegt sind, zum Eingriff in die mit radial geringem Abstand zur Lauffläche der Laufräder 2 innenseitig, nach innen weisenden Verzahnungen 45. Entsprechend sind die Laufräder 2 gegen Verdrehen um die Laufradachse x gesichert. Über die Druckfedern 40 und 41 sind die Eingriffsteile 37 und 38 unabhängig voneinander nach radial innen ausweichbar gehaltert. So kann ein Eingriffszahn 44 eines Eingriffsteiles 37 oder 38 wie in Fig. 13 dargestellt in die zugeordnete Verzahnung 45 eines Laufrades 2 eingreifen, während die Eingriffszähne 44 des anderen Eingriffsteiles stumpf gegen die Verzahnung 45 des diesem zugeordneten Laufrades 2 treten und so nicht in Eingriffsstellung gelangen. Diese wird erst nach einem leichten Verrücken der Doppelrolle 1 selbsttätig erreicht, indem das noch freie Laufrad 2 leicht drehverlagert wird, wonach die Eingriffszähne 44 in die nächsten Zahnlücken federunterstützt einfallen.

Durch Drehrückverlagerung des Steuernockens 11 wird über den Betätigungsstößel 15 der Eingriff von Schwenkblockierungsteil 69 und Feststellgegenteil 65 sowie über die Einstellschraube 28 und das Laufradbremsteil 25 mittelbar der Formschlusseingriff zwischen den Eingriffszähnen 44 und den Verzahnungen 45 der Laufräder 2 aufgehoben.

Weiter ausgehend aus der Neutralstellung in Fig. 4 wird durch Verdrehen des Steuernockens 11 entgegen Uhrzeigerrichtung die Bockrollenstellung erreicht. In dieser Stellung greift der Rastnocken 18" in die zugeordnete Einsenkung 20 der Blattfeder 19 ein. Auch diese Steuernockenstellung ist anschlagbegrenzt, wozu an dem Steuernocken benachbart zu dem Rastnocken 18" eine Anschlagfläche 77 ausgeformt ist, die in dieser Stellung gegen einen abgestützten Randabschnitt der Blattfeder 19 tritt.

Dem Rastnocken 18" ist die gegenüberliegende Stirnfläche 17" zugeordnet, die mit Bezug auf die Drehachse z den radial größten Abstand aufweist. Über diese Steuerfläche 17" ist der Betätigungsstößel 15 in die axial unterste Stellung entgegen der Federkraft der Stößel- bzw. Nachstellfeder 32, 76 verlagert, unter Mitnahme des Laufradbremsteiles 25. Die Eingriffsteile 37, 38 nehmen entsprechend einen gegenüber der Neutralstellung radial größeren Abstand zu den Laufradverzahnungen 45 ein.

Über die vertikale Abwärtsverlagerung des Betätigungsstößels 15 wird auch das Schwenkblockierungsteil 69 mitgeschleppt. Die diese unterseitig beaufschlagende zweite Vorspannfeder 72 erfährt hierbei keine Stauchung.

Das an dem Betätigungsstößel 15 ausgeformte Richtungsfeststellteil 21 wird mit seinen Flügelabschnitten 22 in die Eingriffsstellung zu den Vertiefungen 67 des Feststellgegenteiles 65 verbracht, zur Erlangung einer Drehblockierung der Doppelrolle 1. Entsprechend der Ausformung von nur zwei gegenüberliegend vorgesehenen Flügelabschnitten 22 und entsprechend nur zwei gegenüberliegend ausgeformten Vertiefungen 67 im Feststellgegenteil 65 wird diese Drehblockierung nur in zwei Schwenkstellungen der Rolle 1 erreicht, nämlich in den beiden 180°-Stellungen. Sofern eine solche noch nicht eingenommen ist, stoßen die Flügelabschnitte 22 stumpf gegen die Oberfläche des Feststellgegenteiles 65 umfangsmäßig außerhalb der Vertiefungen 67, was über die Zwangsabwärtsverlagerung des Betätigungsstößels 15 eine entgegen der Rückstellkraft der ersten Vorspannfeder 73 erfolgende axiale Abwärtsverlagerung des Feststellgegenteiles 65 um das Tiefenmaß der Vertiefungen 67 bedingt. Ein hiernach erfolgendes Verschwenken der Rolle 1 in die nächste 180°-Stellung bewirkt das selbsttätige Einrasten durch Aufwärtsverlagerung des Feststellgegenteiles 65, wonach die Flügelabschnitte 22 des Richtungsfeststellteils 21 in den Vertiefungen 67 formschlüssig einliegen.

In dieser Stellung ist die Doppelrolle 1 bei freier Drehbeweglichkeit der Laufräder 2 schwenkblockiert.

Die Zähne 44 der Eingriffsteile 37, 38 und die Zähne der Laufrad-Verzahnung 45 weisen bevorzugt unterschiedliche Zahnflankenwinkel auf, so dass es bei Zahneingriff nicht zu einer vollflächigen Zahnflankenanlage kommt, sondern vielmehr zu einer linienartigen, bis hin zu einer balligen Anlage. So ist bspw. der Öffnungswinkel einer Laufrad-Verzahnungslücke größer als der eingeschlossene Winkel zweier einen Zahn 44 begrenzender Flanken.

In dem dargestellten Ausführungsbeispiel wird aus der Neutralstellung gemäß der Darstellung in Fig. 4 eine axiale Abwärtsverlagerung des Betätigungsstößels 15 in die Bockrollenstellung von etwa 2,5 mm erreicht.

## Patentansprüche

1. Doppelrolle (1) mit zwei Laufrädern (2) und einem Traggehäuse (3), wobei an dem Traggehäuse (3) ein Montagezapfen (6) ausgebildet ist, in dem ein Betätigungsstößel (15) gegen Federkraft verlagerbar ist und zur Richtungs- und / oder Totalfeststellung mit einem Feststellgegenteil (65) zusammenwirkt, und wobei weiter ein Laufradbremsteil (25) mit Eingriffsteilen (37,38) vorgesehen ist, zur Drehblockierung der Laufräder (2), welches Laufradbremsteil (25) gleichfalls durch den Betätigungsstößel (15) betätigt ist und wobei darüber hinaus der den Betätigungsstößel (15) aufnehmende Gehäuseabschnitt (4) oberseitig ein Kugellager (8) aufweist und nach unten den Betätigungsstößel (15) zumindest teilweise umschließt, **dadurch gekennzeichnet, dass** unterhalb des Kugellagers (9) in dem sich hinsichtlich seiner Innenöffnung lediglich öffnenden Gehäuseabschnitt (4) das Feststellgegenteil (65) einliegt und dass die oberste Stellung des Betätigungsstößels (15) der Eingriffsstellung der Eingriffsteile (37, 38) entspricht.

2. Doppelrolle nach Anspruch 1, **dadurch gekennzeichnet, dass** das Feststellgegenteil (65) nach oben unabhängig von der Schwenkblockierungsstellung durch eine Gehäuseschulter (74) abgestützt ist und/oder dass der Betätigungsstößel (15) unterhalb des Feststellgegenteils (65) nur mittels des Laufradbremsteils (25) in dem Gehäuse (3) radial abgestützt ist.

3. Doppelrolle nach einem der Ansprüche 1 oder 2, **dadurch gekennzeichnet, dass** der Betätigungsstößel (15) über eine Stößelfeder (32) in seine oberste Stellung vorgespannt ist, wobei bevorzugt die Stößelfeder (32) einerseits am Gehäuse (3) und andererseits am Laufradbremsteil (25) abgestützt ist.

4. Doppelrolle nach einem der vorhergehenden Ansprüche, **dadurch gekennzeichnet, dass** zwei Kugellager (8,9) untereinander und oberhalb des Feststellgegenteils (65) angeordnet vorgesehen sind und/oder dass das Feststellgegenteil (65) zur Totalfeststellung mit einem Schwenkblockierungsteil (69) zusammenwirkt und dass das Feststellgegenteil (65) und das Schwenkblockierungsteil (69) unabhängig voneinander axial beweglich sind.

5. Doppelrolle nach einem der vorhergehenden Ansprüche, **dadurch gekennzeichnet, dass** das Feststellgegenteil (65) und das Schwenkblockierungsteil (69) jeweils durch eine eigene Feder, eine erste (73) und eine zweite Vorspannfeder (72), belastet sind, wobei, bevorzugt die erste (73) und die zweite Vorspannfeder (72) konzentrisch zueinander angeordnet sind und/oder die erste (73) und die zweite Vorspannfeder (72) beide an dem Laufradbremsteil (25) abgestützt sind.

6. Doppelrolle nach einem der vorhergehenden Ansprüche, **dadurch gekennzeichnet, dass** das Feststellgegenteil (65) zur Richtungsfeststellung mit einem Richtungsfeststellteil (21) zusammenwirkt und dass das Feststellgegenteil (65) und das Richtungsfeststellteil (21) unabhängig voneinander axial beweglich sind, wobei, bevorzugt das Richtungsfeststellteil (21) an dem Betätigungsstößel (15) ausgebildet ist und/oder das Richtungsfeststellteil (21) und das Drehblockierungsteil (69) unabhängig voneinander axial beweglich sind.

7. Doppelrolle nach einem der vorhergehenden Ansprüche, **dadurch gekennzeichnet, dass** das Laufradbremsteil (25) zentral bezüglich des Betätigungsstößels (15) eine Einstellschraube (28) aufweist, wobei, bevorzugt die Einstellschraube (28) von unten zugänglich ist und/oder eine Durchgriffsbohrung (34) mit der dem Betätigungsstößel (15) zugeordneten Einstellschraube (28) fluchtet.

8. Doppelrolle (1) mit zwei Laufrädern (2) und einem sich zwischen den Laufrädern (2) erstreckenden, nach oben geschlossenen Traggehäuse (3), welches von der Laufradachse (x) durchsetzt ist, wobei weiter an dem Traggehäuse (3) ein Montagezapfen (6) ausgebildet ist, in dem ein Betätigungsstößel (15) gegen Federkraft verlagerbar ist, **dadurch gekennzeichnet, dass** das Traggehäuse (3) eine Horizontalteilung aufweist, wobei die Teilung unterhalb der Laufradachse (x) ausgebildet ist.

9. Doppelrolle nach Anspruch 8, **dadurch gekennzeichnet, dass** die Gehäuseteile (50, 51) im Bereich der Laufradachse (x) ineinander greifen, wobei, bevorzugt jedes Gehäuseteil (50, 51) einen Teil der Laufradnabe ausbildet und/oder das obere Gehäuseteil (50) zu den Laufrädern (2) hin seitlich geschlossen ist, mit Ausnahme eines Durchbruchs (49) für vom Gehäuseinnern her beaufschlagte Drehblockierungs-Eingriffsteile (37, 38).

10. Doppelrolle nach einem der Ansprüche 8 oder 9, **dadurch gekennzeichnet, dass** das Gehäuseoberteil (50) gekammert ausgebildet ist und/oder das Gehäuseunterteil (51) mit Ausnahme von Durchgriffsbohrungen (34,55) kammerfrei ausgebildet ist.

11. Doppelrolle nach einem der Ansprüche 8 bis 10, **dadurch gekennzeichnet, dass** der Betätigungsstößel (15) und ggf. ein Laufradbremsteil (25) und / oder eine Richtungs- oder Totalfeststellung nur in dem Gehäuseoberteil (50) ausgebildet ist, wobei, bevorzugt der Betätigungsstößel (15) durch eine Stößelfeder (32) in seine oberste Stellung vorgespannt ist und die Stößelfeder (32) auf einem am Gehäuseunterteil (51) ausgebildeten Boden (33) aufliegt und/oder das Gehäuseunterteil (51) hinsichtlich der Feststell/ Blockierungselemente nur mit der Stößelfeder (32) belastet ist.

12. Doppelrolle (1) nach einem der vorhergehenden Ansprüche, **dadurch gekennzeichnet, dass** das Laufradbremsteil (25) lediglich durch Federkraft, die von einer Nachstellfeder (76) aufgebracht ist, gegen den Betätigungsstößel (15) angedrückt ist und dass die Nachstellfeder (76) als unterste Feder angeordnet ist.

13. Doppelrolle nach Anspruch 12, **dadurch gekennzeichnet, dass** sich die Nachstellfeder (76) auf einem gehäusefesten Boden (33) abstützt, wobei, bevorzugt der gehäusefeste Boden (33) unterhalb der Laufradachse (x) ausgebildet ist.

14. Doppelrolle nach einem der vorhergehenden Ansprüche, **dadurch gekennzeichnet, dass** ein Laufradachskörper (61) und eine Laufradnabe (63) vorgesehen sind, dass mit dem Laufradachskörper (61) ein von außen sichtbares Abdeckteil (78) verbunden ist, dass das Abdeckteil (78) mit dem Laufradachskörper (61) zumindest im Reibschluss verbunden ist und bei Benutzung die Laufradnabe (63) sich relativ zum Abdeckteil (78) dreht, und dass das Abdeckteil (78) von einem transparenten Schutzteil (81) überfangen ist.

15. Doppelrolle nach Anspruch 14, **dadurch gekennzeichnet, dass** das Schutzteil (81) mit der Laufradnabe (63) mitdrehend angeordnet ist und/oder das Abdeckteil (78) ausgehend von radial innen teilweise die Laufradnabe (63) übergreift und/oder das Schutzteil (81) an der Laufradnabe (63) rastgehaltert ist.

## Claims

1. Double roller (1) with two running wheels (2) and a carrying housing (3), the carrying housing (3) having formed on it a mounting pin (6) in which an actuating push rod (15) can be displaced counter to spring force and interacts with a locking counter-part (65) for directional and/or full locking, and in addition, a running-wheel braking part (25) with engagement parts (37, 38) being provided, for rotational blocking of the running wheels (2), which running-wheel braking part (25) is likewise actuated by the actuating push rod (15), and furthermore, the housing portion (4) which accommodates the actuating push rod (15) having a ball bearing (8) on the upper side and at least partially enclosing the actuating push rod (15) in the downward direction, **characterized in that** the locking counter-part (65) is located beneath the ball bearing (9), in the housing portion (4) which is only open internally and **in that** the uppermost position of the actuating push rod (15) corresponds to the engagement position of the engagement parts (37, 38).

2. Double roller according to Claim 1, **characterized in that** the locking counter-part (65) is supported in the upward direction by a housing shoulder (74), irrespective of the pivoting-blocking position, and/or **in that** the actuating push rod (15) is supported radially in the housing (3) beneath the locking counter-part (65) only by means of the running-wheel braking part (25).

3. Double roller according to either of Claims 1 and 2, **characterized in that** the actuating push rod (15) is biased into its uppermost position via a push-rod spring (32), the push-rod spring (32) preferably being supported, on the one hand, on the housing (3) and, on the other hand, on the running-wheel braking part (25).

4. Double roller according to any of the preceding claims, **characterized in that** two ball bearings (8, 9) are disposed one beneath the other and above the locking counter-part (65), and/or **in that**, for full locking, the locking counter-part (65) interacts with a pivoting-blocking part (69), and **in that** the locking counter-part (65) and the pivoting-blocking part (69) can be moved axially independently of one another.

5. Double roller according to any of the preceding claims, **characterized in that** the locking counter-part (65) and the pivoting-blocking part (69) are subjected to loading in each case by a dedicated spring, a first biasing spring (73) and a second biasing spring (72), the first biasing spring (73) and the second biasing spring (72) preferably being disposed concentrically in relation to one another, and/or the first biasing spring (73) and the second biasing spring (72) being both supported on the running-wheel braking part (25).

6. Double roller according to any of the preceding claims, **characterized in that**, for directional locking, the locking counter-part (65) interacts with a directional-locking part (21), and **in that** the locking counter-part (65) and the directional-locking part (21) can be moved axially independently of one another, the directional-locking part (21) preferably being formed on the actuating push rod (15), and/or the directional-locking part (21) and the rotational-blocking part (69) being movable axially independently of one another.

7. Double roller according to any of the preceding claims, **characterized in that**, centrally in relation to the actuating push rod (15), the running-wheel braking part (25) has an adjusting screw (28), the adjusting screw (28) preferably being accessible from beneath, and/or a through hole (34) being aligned with the adjusting screw (28) that is associated with the actuating push-rod (28).

8. Double roller (1) with two running wheels (2) and a carrying housing (3) which extends between the running wheels (2), is closed in the upward direction and has the running-wheel axis (x) passing through it, in addition, the carrying housing (3) having formed on it a mounting pin (6) in which an actuating push rod (15) can be displaced counter to spring force, **characterized in that** the carrying housing (3) is divided horizontally, the division being formed beneath the running-wheel axis (x).

9. Double roller according to Claim 8, **characterized in that** the housing parts (50, 51) engage one inside the other in the region of the running-wheel axis (x), each housing part (50, 51) preferably forming part of the running-wheel hub, and/or the upper housing part (50) being closed laterally in the direction of the running wheels (2), with the exception of a through-passage (49) for rotational-blocking engagement parts (37, 38) which are acted upon from the housing interior.

10. Double roller according to either of Claims 8 and 9, **characterized in that** the upper housing part (50) contains chambers, and/or, with the exception of through-holes (34, 55), the lower housing part (51) is free of chambers.

11. Double roller according to any of Claims 8 to 10, **characterized in that** the actuating push rod (15) and, if appropriate, a running-wheel braking part (25) and/or a directional-locking or full-locking means are formed only in the upper housing part (50), the actuating push rod (15) preferably being biased into its uppermost position by a push-rod spring (32), and the push-rod spring (32) resting on a base (33) formed on the lower housing part (51), and/or, in respect of the locking/blocking elements, the lower housing part (51) being subjected to loading only by the push-rod spring (32).

12. Double roller (1) according to any of the preceding claims, **characterized in that** the running-wheel braking part (25) is forced against the actuating push rod (15) merely by spring force which is applied by an adjusting spring (76), and **in that** the adjusting spring (76) is disposed as the lowermost spring.

13. Double roller according to Claim 12, **characterized in that** the adjusting spring (76) is supported on a housing-mounted base (33), the housing-mounted base (33) preferably being formed beneath the running-wheel axis (x).

14. Double roller according to any of the preceding claims, **characterized in that** a running-wheel-axle body (61) and a running-wheel hub (63) are provided, **in that** an externally visible covering part (78) is connected to the running-wheel-axle body (61), **in that** the covering part (78) is connected to the running-wheel-axle body (61) at least by frictional fitting and, during use, the running-wheel hub (63) rotates relative to the covering part (78), and **in that** the covering part (78) is covered over by a transparent protective part (81).

15. Double roller according to Claim 14, **characterized in that** the protective part (81) is disposed such that it rotates along with the running-wheel hub (63), and/or, starting from a radially inward location, the covering part (78) engages partially over the running-wheel hub (63), and/or the protective part (81) is latchingly held on the running-wheel hub (63).

## Revendications

1. Roulette double (1) avec deux roues mobiles (2) et un boîtier support (3), sur le boîtier support (3) étant réalisé un tourillon de montage (6) dans lequel un poussoir d'actionnement (15) est déplaçable à l'encontre d'une force élastique et coopère avec une partie conjuguée de blocage (65) pour assurer le blocage directionnel et/ou total, et où en outre est prévu une partie de freinage de roue mobile (25) avec des parties de mise en prise (37, 38), pour assurer le blocage en rotation des roues mobiles (2), ladite partie de freinage de roue mobile (25) étant également actionnée par le poussoir d'actionnement (15) et où, de plus, le tronçon de boîtier (4) qui reçoit le poussoir d'actionnement (15) présente, du côté supérieur, un roulement à billes (8) et entoure, au moins partiellement, le poussoir d'actionnement (15), **caractérisé en ce que** la partie conjuguée de blocage (65) est située au-dessous du roulement à billes (9), dans le tronçon de boîtier (4), s'ouvrant uniquement du point de vue de son ouverture intérieure, et **en ce que** la position la plus haute du poussoir d'actionnement (15) correspond à la position de mise en prise des parties de mise en prise (37,38).

2. Roulette double selon la revendication 1, **caractérisée en ce que** la partie conjuguée de blocage (65) est soutenue vers le haut, indépendamment de la position de blocage en pivotement, au moyen d'un épaulement de boîtier (74), et/ou en ce que le poussoir d'actionnement (15) est soutenu radialement dans le boîtier (3) au-dessous du partie conjuguée de blocage (65), uniquement au moyen de la partie de freinage de roue mobile (25).

3. Roulette double selon l'une des revendications 1 ou 2, **caractérisée en ce que** le poussoir d'actionnement (15) est précontraint à sa position la plus haute au moyen d'un ressort de poussoir (32), de préférence le ressort de poussoir (32) étant soutenu d'un côté sur le boiter (3) et de l'autre côté sur la partie de freinage de roue mobile (25).

4. Roulette double selon l'une des revendications précédentes, **caractérisée en ce que** deux roulements à billes (8, 9) sont disposés l'un au-dessus de l'autre et au-dessus de la partie conjuguée de blocage (65), et/ou **en ce que** la partie conjuguée de blocage (65) coopère avec une partie de blocage en pivotement (69) pour assurer le blocage total et **en ce que** la partie conjuguée de blocage (65) et la partie de blocage en pivotement (69) sont déplaçables axialement indépendamment l'une de l'autre.

5. Roulette double selon l'une des revendications précédentes, **caractérisée en ce que** la partie conjuguée de blocage (65) et la partie de blocage en pivotement (69) sont sollicitées chacune par un ressort propre, une premier (73) et un deuxième ressort de précontrainte (72), sachant que, de préférence, le premier (73) et le deuxième ressort de précontrainte (72) sont disposés concentriquement l'un à l'autre, et/ou le premier (73) et le deuxième ressort de précontrainte (72) sont tous deux soutenus sur la partie de freinage de roue mobile (25).

6. Roulette double selon l'une des revendications précédentes, **caractérisée en ce que** la partie conjuguée de blocage (65) coopère avec une partie de blocage directionnel (21) pour assurer le blocage directionnel, et **en ce que** la partie conjuguée de blocage (65) et la partie de blocage directionnel (21) sont déplaçables axialement indépendamment l'une de l'autre, sachant que, de préférence, la partie de blocage directionnel (21) est réalisée sur le poussoir d'actionnement (15) et/ou la partie de blocage directionnel (21) et la partie de blocage en pivotement (69) sont déplaçables axialement indépendamment l'une de l'autre.

7. Roulette double selon l'une des revendications précédentes, **caractérisée en ce que** la partie de freinage de roue mobile (25) présente, centralement par rapport au poussoir d'actionnement (15), une vis de réglage (28), sachant que, de préférence, la vis de réglage (28) est accessible depuis le bas et/ou un perçage d'accès (34) est aligné avec la vis de réglage (28) associée au poussoir d'actionnement (15).

8. Roulette double (1) avec deux roues mobiles (2) et un boîtier support (3) fermé vers le haut, s'étendant entre les deux roues mobiles (2), traversé par l'axe de roue mobile (x), où, en outre, sur le boîtier support (3) est réalisé un tourillon de montage (6) dans lequel un poussoir d'actionnement (15) est déplaçable à l'encontre d'une force élastique, **caractérisée en ce que** le boîtier support (3) présente une division horizontale, la division étant réalisée au-dessous de l'axe de roue mobile (x).

9. Roulette double selon la revendication 8, **caractérisée en ce que** les parties de boîtier (50, 51) s'engagent l'une dans l'autre dans la zone de l'axe de roue mobile (x), sachant que, de préférence, chaque partie de boîtier (50, 51) constitue une partie du moyeu de roue mobile et/ou que la partie de boîtier supérieure (50) est fermée latéralement vers les roues mobiles (2), à l'exception d'un passage (49) pour des parties de mise en prise (37, 38) sollicitées depuis l'intérieur du boîtier.

10. Roulette double selon l'une des revendications 8 ou 9, **caractérisée en ce que** la partie de boîtier supérieure (50) est conformée avec des chambres, et/ou la partie de boîtier inférieure (51) est exempte chambre, à l'exception de parçages de passage (34, 55).

11. Roulette double selon l'une des revendications 8 à 10, **caractérisée en ce que** le poussoir d'actionnement (15) et, le cas échéant, une partie de freinage de roue mobile (25) etlou un blocage directionnel ou total est réalisé uniquement dans la partie de boîtier supérieure (50), sachant que, de préférence, le poussoir d'actionnement (15) est précontraint à sa position la plus haute au moyen d'un ressort de poussoir (32), et le ressort de poussoir (32) reposant sur un fond constitué sur la partie de boîtier inférieure (51) et/ou la partie de boîtier inférieure (51) est sollicitée seulement par le ressort de poussoir (32) quant aux éléments de blocage/immobilisation.

12. Roulette double (1) selon l'une des revendications précédentes, **caractérisée en ce que** la partie de freinage de roue mobile (25) est pressée contre le poussoir d'actionnement (15) uniquement par une force élastique appliquée par un ressort de rattrapage (76), et **en ce que** le ressort de rattrapage (76) est disposé en tant que ressort le plus bas.

13. Roulette double selon la revendication 12, **caractérisée en ce que** le ressort de rattrapage (76) prend appui sur un fond (33) fixe par rapport au boîtier, sachant que, de préférence, le fond (33) fixe par rapport au boîtier est réalisé au-dessous de l'axe de roue mobile (x).

14. Roulette double selon l'une des revendications précédentes, **caractérisée en ce que** sont prévus un corps d'axe de roue mobile (61) et un moyeu de roue mobile (63), **en ce qu'**une partie de recouvrement (78) visible de l'extérieur est reliée au corps d'axe de roue mobile (61), **en ce que** la partie de recouvrement (78) est reliée, au moins en une liaison par friction, au corps d'axe de roue mobile (61) et, en cas d'utilisation, le moyeu de roue mobile (63) tourne par rapport à la partie de recouvrement (78), et **en ce que** la partie de recouvrement (78) est entourée par une partie de protection (81) transparente.

15. Roulette double selon la revendication 14, **caractérisée en ce que** la partie de protection (81) est disposée de manière à tourner conjointement avec le moyeu de roue mobile (63) et/ou la partie de recouvrement (78) entoure le moyeu de roue mobile (63) partiellement en partant de radialement intérieurement et/ou la partie de protection (81) est maintenue encliquetée sur le moyeu de roue mobile (63).
